# DEMANDE DE BREVET EUROPEEN

(11) **EP 3 287 429 A1**
(43) Date de publication de la demande: **28.02.2018**
(21) Numéro de dépôt: 16185920.2
(22) Date de dépôt: 26.08.2016
(51) Int. Cl.: C04B 35/48, C04B 41/45, G04B 37/22, G04B 45/00

(54) **PROCÉDÉ D'OBTENTION D'UN ARTICLE À BASE DE ZIRCONE CARBO-NITRURE**

(71) Demandeur: The Swatch Group Research and Development Ltd., 2074 Marin (CH)
(72) Inventeur: Faure, Cédric, 2016 Cortaillod (CH); Curchod, Loïc, 1004 Lausanne (CH)
(74) Mandataire: Goulette, Ludivine

(57) **Abrégé**

La présente invention concerne un procédé d'obtention d'un article fini ou semi-fini à base de zircone, la surface de l'article ayant un aspect extérieur métallique et une conductivité électrique non-nulle, caractérisé en ce qu'il comprend les étapes consistant à :
- se munir d'au moins un article en zircone préalablement conformé dans sa forme finie ou semi-finie;
- disposer ledit article dans une enceinte dans laquelle un mélange de gaz à base d'hydrogène, de carbone et d'azote est chauffé ;
- chauffer ledit article et le mélange de gaz jusqu'à obtenir une dissociation des molécules des gaz à base d'hydrogène, de carbone et d'azote ainsi qu'une élévation de la température dudit article ;
- et maintenir ledit article dans l'atmosphère réactive ainsi créée pour avoir une diffusion des atomes de carbone et d'azote dans la surface extérieure dudit article.

Le traitement résulte en une couleur de la surface de la pièce allant du platine à l'or, en passant par le bronze et l'or rose, en fonction des concentrations relatives de carbone et d'azote dans le mélange gazeux injecté dans l'enceinte pendant le procédé.

## Description

La présente invention concerne un article à base de zircone, notamment frittée, et en particulier un tel article dont la structure chimique est transformée sur une partie de son épaisseur pour conférer à cet article une surface extérieure ayant un aspect métallique ainsi qu'une conductivité électrique non-nulle. L'invention concerne également une utilisation d'un tel article comme élément d'habillage d'un article tel qu'une montre-bracelet, un bijou ou tout autre article de l'industrie du luxe pouvant faire appel à ce genre de produit, en particulier pour réaliser des éléments de construction de boîtes de montre ou de bracelets. La présente invention concerne enfin un procédé d'obtention d'un tel article.

### ART ANTERIEUR

Parmi tous les matériaux connus, les métaux sont très largement utilisés à cause de certaines propriétés très intéressantes : grande résistance mécanique, ténacité élevée, conductivité électrique, etc. En outre, leur éclat caractéristique est très recherché pour les applications décoratives. Leur dureté est toutefois inférieure à celle des céramiques, ce qui peut conduire à une usure et une corrosion importantes dans de nombreuses conditions d'utilisation courantes, par exemple, lorsque ces matériaux sont utilisés pour réaliser des pièces d'habillage d'horlogerie comme des boîtes de montre ou des bracelets.

Il est connu des procédés de mise en forme et de polissage de céramiques afin d'obtenir des pièces d'habillage dont la dureté ainsi que la résistance à l'usure et à la corrosion sont largement supérieures à celles des métaux.

Il est connu un procédé pour modifier une telle pièce en céramique à base de zircone (ZrO₂) dans le but de lui conférer des propriétés métalliques dont une couleur grise et une brillance proches de celles du platine ainsi qu'une conductivité de surface non-nulle, tout en conservant sa dureté et sa résistance à l'usure et à la corrosion supérieures à celles des métaux. Ce procédé permet l'obtention d'un article en zircone fini ou semi-fini ayant un coeur en ZrO₂ partiellement réduite et un aspect extérieur métallique. Il comprend les étapes consistant à :
- se munir d'au moins un article en zircone préalablement conformé dans sa forme finie ou semi-finie;
- disposer ledit article dans une enceinte dans laquelle on crée un plasma obtenu à partir d'un mélange d'hydrogène, d'un gaz neutre, et de traces de carbone, et
- maintenir ledit article à proximité du plasma pendant un temps d'environ 15 à 240 minutes, la température moyenne de l'article s'établissant dans ces conditions entre environ 600 et 1'300 °C, afin d'obtenir une diffusion des atomes de carbone dans ledit article.

Un tel procédé permet ainsi de produire une pièce en zircone ayant une couche extérieure en carbure de zirconium ZrC avec un aspect et des propriétés métalliques, i.e. une surface brillante et conductrice, tout en conservant ses propriétés avantageuses par rapport à une pièce en métal.

Aussi, avantageusement par rapport à des procédés de dépôts de couches minces décoratives d'aspect métallique par PVD ou CVD ou d'autres méthodes de déposition, la couche extérieure d'aspect métallique produite par ce procédé de carburation est solidaire du coeur de la pièce, résultant en une accroche parfaite de la couche avec un risque de délaminage nul.

Finalement, ce procédé permet d'obtenir des pièces finies ou semi-finies avec les propriétés avantageuses du carbure de zirconium ZrC sur sa surface sans devoir produire des pièces en ZrC massif, ce qui impliquerait des procédés de frittage à haute température, éventuellement sous pression. Aussi, le ZrC est plus de 10% plus dense que le ZrO₂, de sorte que des pièces en ZrO₂ carburées par le procédé susmentionné sont plus légères que des pièces de même géométrie en ZrC massif. Enfin, le ZrC étant beaucoup plus dur (typiquement 25 GPa) que le ZrO₂ (typiquement 13 GPa), des pièces en ZrC massif seraient beaucoup plus dures à usiner et polir après frittage que les mêmes pièces en ZrO₂. Le procédé susmentionné pallie ce problème en permettant de reporter la transformation de la surface de la pièce en ZrC après l'usinage et le polissage de la pièce en ZrO₂.

Ce procédé peut être adapté pour obtenir une couche de nitrure de zirconium ayant aussi un aspect métallique et une conductivité électrique non-nulle ainsi qu'une accroche parfaite, mais de couleur jaune proche de l'or. Pour cela, le plasma est obtenu à partir d'un mélange d'hydrogène, d'un gaz neutre, et de traces d'azote.

Toutefois, on constate que le spectre de couleur possible pour ces procédés de carburation / nitruration est assez limité. En effet, la carburation permet d'obtenir un effet métallique avec une coloration typée platine alors que la nitruration permet d'obtenir un effet métallique avec une coloration typiquement dorée. Or, il existe un besoin d'augmenter le niveau de personnalisation d'articles comme les téléphones ou montres ou bijoux et cette personnalisation passe par l'augmentation des coloris disponibles.

### RESUME DE L'INVENTION

L'invention a pour but de remédier aux inconvénients de l'art antérieur en fournissant un procédé d'obtention d'un article en zircone permettant la formation de couches de carbo-nitrure de zirconium sur l'épaisseur de sa surface avec les mêmes propriétés esthétiques, électriques et de résistance mécanique et chimique que les couches obtenues par procédé plasma, mais avec une gamme de coloris allant du platine pour une carburation pure au doré pour une nitruration pure, en passant par le bronze et l'or rose, en fonction de la stoechiométrie (ou concentration) relative du carbone C et de l'azote N qui ont diffusé dans la zircone, ladite stoechiométrie relative dépendant à son tour de la concentration relative en carbone et azote dans l'atmosphère de l'enceinte.

A cet effet, l'invention a pour objet un procédé d'obtention d'un article fini ou semi-fini à base de zircone, l'article ayant un aspect extérieur métallique et une conductivité électrique non-nulle en surface, caractérisé en ce qu'il comprend les étapes consistant à :
- se munir d'au moins un article en zircone préalablement conformé dans sa forme finie ou semi-finie;
- disposer ledit article dans une enceinte dans laquelle un mélange gazeux est injecté, ce mélange gazeux comprenant au moins un premier composé de gaz à base d'hydrogène et de carbone dans une première concentration et un second composé de gaz à base d'hydrogène et d'azote dans une seconde concentration, et
- chauffer ledit mélange gazeux jusqu'à obtenir une dissociation des molécules des premier et second composés et maintenir ledit article dans l'enceinte contenant les gaz chauffés pour le chauffer aussi et obtenir une diffusion des atomes de carbone et d'azote dans la surface extérieure dudit article.

Le procédé selon l'invention permet avantageusement de fournir une autre option de couleur pour la coloration d'un élément en céramique, cette couleur pouvant être ajustée en fonction de la concentration du premier composé et du second composé dans le mélange gazeux.

Dans un premier mode de réalisation avantageux, le mélange gazeux est chauffé et ses molécules sont dissociées par au moins un élément résistif en métal réfractaire traversé par un courant électrique et disposé dans l'enceinte de sorte à chauffer le mélange gazeux et les articles à traiter de manière homogène.

Dans un second mode de réalisation avantageux, le mélange gazeux est chauffé et ses molécules sont dissociées par un plasma produit dans l'enceinte de sorte à chauffer le mélange gazeux et les articles à traiter de manière homogène.

### BREVE DESCRIPTION DES FIGURES

Les buts, avantages et caractéristiques du dispositif selon la présente invention apparaîtront plus clairement dans la description détaillée suivante d'au moins une forme de réalisation de l'invention donnée uniquement à titre d'exemple non limitatif et illustrée par les dessins annexés sur lesquels :
- La figure 1 représente schématiquement l'article selon l'invention;
- La figure 2 représente schématiquement l'enceinte permettant d'opérer le procédé selon l'invention;

### DESCRIPTION DETAILLEE

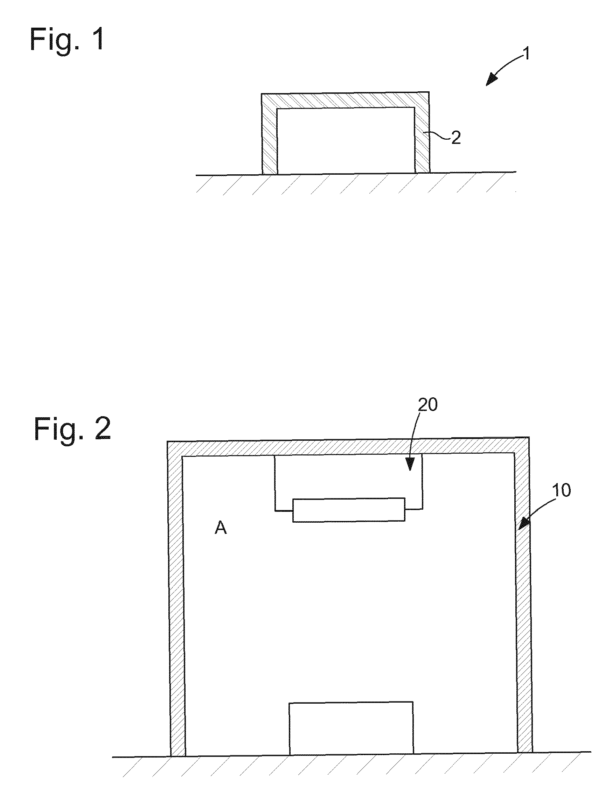

A titre d'exemple sur la figure 1, on se munit d'un objet de départ formé par un article 1 en zircone ayant une configuration cristallographique tétragonale (oxyde de zirconium, ZrO₂), par exemple, de couleur blanche et qui est réalisé selon les techniques usuelles de fabrication d'articles en céramique, par exemple par frittage.

Cet article peut être un produit fini ayant la forme finale dans laquelle il va être utilisé, par exemple une pièce de forme généralement parallélépipédique ayant déjà subi un polissage miroir et destinée à constituer un élément de l'habillage d'une montre, par exemple un maillon de bracelet. Bien entendu, le cas échéant, l'article peut être un produit semi-fini sur lequel des opérations d'usinage ultérieures pourront être réalisées afin d'adapter cet article à son utilisation finale. L'article 1 pourra être une partie d'une montre ou d'un bijou ou de tout article lié à l'industrie du luxe pouvant faire appel à ce genre d'élément d'habillage.

Cet article est ensuite introduit dans une enceinte 10 dans laquelle il sera traité comme visible à la figure 2. Le traitement qui sera appliqué est un traitement simultané de carburation et de nitruration, aussi appelé carbo-nitruration. Un point essentiel du procédé est qu'il s'agit d'une transformation de la surface de l'article sur une faible épaisseur, de l'ordre de 10 à 1'000 nm, la zircone (oxyde de zirconium) dans la région extérieure 2 visible à la figure 1 étant transformée en carbo-nitrure de zirconium ZrCₓN_{y} ayant un aspect métallique. Il s'agit donc d'une modification superficielle de la structure de la zircone en une nouvelle structure cristallographique correspondant à celle d'un carbo-nitrure de zirconium et non d'un revêtement rapporté susceptible d'être arraché ou de se désolidariser de la surface de l'article, notamment lorsque celui-ci est soumis à des conditions d'usure importante. Plus particulièrement, la région extérieure de la couche superficielle qui présente la structure du carbo-nitrure de zirconium s'étend à partir de la surface sur une profondeur comprise entre 20 et 200 nm.

Pour effectuer un traitement de carbo-nitruration, il est nécessaire que l'enceinte 10 renferme une atmosphère A chargée en gaz contenant de l'hydrogène, du carbone et de l'azote, et soit munie de moyens de chauffage 20, ces moyens de chauffage permettant d'activer le traitement.

Selon l'invention, l'enceinte renferme un mélange gazeux comprenant au moins un premier composé et un second composé. Le premier composé est un gaz à base d'hydrogène et de carbone du type CH₄ se trouvant dans une première concentration C1 dans ladite enceinte. Le second composé est un gaz à base d'hydrogène et d'azote du type NH₃ se trouvant dans l'enceinte dans une seconde concentration C2.

L'élévation de température dans l'enceinte permet que le traitement de l'article en zircone puisse avoir lieu. En effet, cette élévation de la température de l'atmosphère de l'enceinte entraine une dissociation des gaz de sorte que les atomes d'hydrogène H, de carbone C et d'azote N soient libres, et une élévation de la température de la pièce en zircone. Sous l'effet combiné de la chaleur et de l'atmosphère d'hydrogène, une partie de l'oxygène contenu dans la zircone diffuse vers sa surface pour quitter la zircone.

Cette réduction partielle de la zircone par diffusion d'une partie de son oxygène vers sa surface est concomitante à une diffusion des atomes de carbone et d'azote de la surface vers le coeur de l'article. En effet, sous l'effet de la chaleur, les atomes de carbone et d'azote dissociés du mélange de gaz de l'enceinte vont diffuser dans la zircone partiellement réduite. Cette diffusion des atomes de carbone et d'azote entraine l'apparition d'une couche superficielle de ces atomes recombinés avec la zircone partiellement réduite pour obtenir une couche de carbo-nitrure de zirconium.

Selon une caractéristique de l'article selon l'invention, la couche superficielle comprend une région de transition située entre le coeur en zircone partiellement réduite et la région extérieure traitée carburée et nitrurée (carbo-nitrurée). En effet, étant donné que le mélange gazeux de l'atmosphère comprend un premier composé à base de carbone et un second composé à base d'azote, l'article est carburé et nitruré simultanément et la région de transition comprend simultanément des oxycarbures et des oxynitrures de zirconium. On remarque donc que la composition chimique de la couche superficielle varie en fonction de la profondeur mesurée à partir de la surface de l'élément d'habillage et passe de façon continue du carbo-nitrure de zirconium stoechiométrique (ZrCₓ-N_{y}) en surface à une région de transition comprenant des oxycarbures et des oxynitrures de zirconium, puis finalement au coeur de la pièce en oxyde de zirconium sous-stoechiométrique (zircone partiellement réduite).

Selon une autre caractéristique préférée de l'invention, la teneur en carbone-azote des oxycarbures-oxynitrures de zirconium dans la région de transition diminue avec la profondeur tandis que leur teneur en oxygène augmente avec la profondeur. La région de transition comprend donc des oxycarbures-oxynitrures de zirconium dont la teneur en carbone/azote diminue graduellement lorsque l'on progresse vers le coeur de l'article alors que la présence d'oxygène augmente progressivement sous la forme de composés du type ZrO_{z}Cₓ-ZrO_{z}N_{y}, pour atteindre progressivement le coeur de l'article qui est constitué essentiellement de zircone partiellement réduite du type ZrO₂₋ₓ. On comprendra bien entendu que la transition entre ces diverses régions se fait graduellement.

Bien entendu, le degré de carburation-nitruration de l'article dépendra des concentrations du premier composé et du second composé dans le mélange gazeux injecté dans l'enceinte. En effet, celles-ci ne sont pas forcément identiques de sorte que, suivant le rapport existant entre la concentration du premier composé et la concentration du second composé dans le mélange gazeux, l'article sera plus carburé que nitruré ou inversement. Or, ce mélange de la carburation et de la nitruration permet audit article de présenter une couleur extérieure peu ordinaire résultant du mélange entre la couleur platine due à la carburation et la couleur dorée due à la nitruration. Le spectre de couleur obtenu va alors s'étendre de la couleur platine à la couleur or jaune, en passant par la couleur bronze et la couleur de l'or rose. La couleur finale dépend alors de la concentration initiale des premier et second composés de sorte que plus la concentration C1 du composé à base de carbone est élevée relativement à la concentration C2 du composé à base d'azote, plus la couleur finale de la pièce tendra vers le bronze, voire le platine. Inversement, plus la concentration C2 du composé à base d'azote est élevée relativement à la concentration C1 du composé à base de carbone, plus la couleur finale de la pièce tendra vers l'or rose, voire l'or jaune. Préférentiellement, la concentration C1 est comprise entre 5 et 100 sccm (standard cubic centimeter per minute) alors que la concentration C2 est comprise entre 250 et 5000 sccm.

Les articles obtenus par ce procédé acquièrent certaines nouvelles propriétés, notamment une conductivité électrique non-nulle en surface, une couleur proche du bronze ou de l'or rose et un éclat métallique tout en conservant les propriétés des céramiques, en particulier leur très grande dureté ainsi que leur résistance à l'usure et à la corrosion.

Dans un premier mode d'exécution, les moyens de chauffage permettant d'activer le traitement comprennent au moins un élément résistif réalisé en un métal réfractaire. Un tel élément résistif utilise un courant électrique le traversant pour produire de la chaleur via l'effet Joule. Les moyens de chauffage 20 peuvent ainsi comprendre un seul élément résistif agencé dans ladite enceinte pour chauffer les gaz et les pièces à traiter de façon homogène ou alors une multitude d'éléments résistifs indépendants répartis pour assurer une distribution de chaleur homogène, comme visible aux figures 3 et 4 respectivement.

Dans un second mode d'exécution, les moyens de chauffage sont un plasma. Un tel plasma est obtenu à partir de l'ionisation du mélange gazeux à base d'hydrogène, de carbone et d'azote et le cas échéant d'un gaz neutre. Ce plasma est obtenu par exemple à l'aide d'une décharge électrique. Bien entendu, selon des variantes du procédé de l'invention d'autres moyens pour engendrer le plasma peuvent être envisagés. A titre d'exemple, le plasma peut être obtenu par radiofréquences (RF) ou encore par micro-ondes.

Selon la méthode utilisée pour obtenir le plasma, l'utilisation de l'argon comme gaz neutre est avantageuse. Bien entendu, l'utilisation d'autres gaz neutres tel que le néon est envisageable.

Dans une variante, il peut être prévu une étape préliminaire de réduction de la zircone. Cette étape de réduction est réalisée avant l'étape de carbo-nitruration et consiste à placer ledit article dans une enceinte dans laquelle du dihydrogène H₂ est injecté. L'atmosphère dans l'enceinte est chauffée de sorte que l'article présente une élévation de température entrainant une diffusion de l'oxygène contenu dans la zircone vers sa surface pour quitter la zircone.

Cette étape de réduction peut être réalisée dans une enceinte spécifique ou dans la même enceinte que l'opération de carbo-nitruration. Dans ce cas-là, l'enceinte comprend des moyens pour modifier la nature de l'atmosphère dans ladite enceinte.

On comprendra que diverses modifications et/ou améliorations et/ou combinaisons évidentes pour l'homme du métier peuvent être apportées aux différents modes de réalisation de l'invention exposée ci-dessus sans sortir du cadre de l'invention définie par les revendications annexées.

## Revendications

1. Procédé d'obtention d'un article (1) fini ou semi-fini à base de zircone, l'article ayant un aspect extérieur métallique et une conductivité électrique non-nulle en surface, **caractérisé en ce qu'**il comprend les étapes consistant à :
- se munir d'au moins un article en zircone préalablement conformé dans sa forme finie ou semi-finie;
- disposer ledit article dans une enceinte (10) dans laquelle un mélange gazeux est agencé, ce mélange gazeux comprenant au moins un premier composé de gaz à base d'hydrogène et de carbone dans une première concentration (C1) et un second composé de gaz à base d'hydrogène et d'azote dans une seconde concentration (C2), et
- chauffer le mélange gazeux jusqu'à obtenir une dissociation des molécules des premier et second composés et maintenir ledit article dans l'atmosphère réactive ainsi créée pour avoir une diffusion des atomes de carbone et d'azote dans la surface extérieure (2) dudit article.

2. Procédé selon la revendication 1, **caractérisé en ce qu'**il comprend en outre, pendant l'étape de chauffage des gaz contenus dans l'enceinte, une diffusion d'oxygène contenu dans ledit article en zircone vers sa surface pour le quitter.

3. Procédé selon la revendication 1, **caractérisé en ce qu'**il comprend en outre, préalablement à l'étape de chauffage des gaz de procédé contenus dans l'enceinte, une étape de réduction consistant à placer ledit article dans une enceinte dans laquelle du dihydrogène est injecté et à chauffer ce dihydrogène permettant la diffusion de l'oxygène contenu dans ledit article en zircone vers sa surface pour le quitter.

4. Procédé selon l'une des revendications précédentes, **caractérisé en ce que** l'épaisseur de la couche transformée sur la surface extérieure dudit article est comprise entre 10 et 1'000 nm.

5. Procédé selon la revendication 4, **caractérisé en ce que** l'épaisseur de la couche transformée sur la surface extérieure dudit article est comprise entre 20 et 200 nm.

6. Procédé selon l'une des revendications précédentes, **caractérisé en ce que** la concentration du second composé à base d'hydrogène et d'azote est plus importante que celle du premier composé à base d'hydrogène et de carbone.

7. Procédé selon l'une des revendications précédentes, **caractérisé en ce que** la concentration du premier composé est comprise entre 5 et 100 sccm.

8. Procédé selon l'une des revendications précédentes, **caractérisé en ce que** la concentration du second composé est comprise entre 250 et 5000 sccm.
